Europäisches Patentamt

European Patent Office

Office européen des brevets

(11) Publication number : **0 495 701 A1**

## (12) EUROPEAN PATENT APPLICATION

(21) Application number : **92400078.9**

(22) Date of filing : **13.01.92**

(51) Int. Cl.[5] : **F16D 7/04**

(30) Priority : **14.01.91 US 640673**

(43) Date of publication of application :
**22.07.92 Bulletin 92/30**

(84) Designated Contracting States :
**DE FR GB**

(71) Applicant : **ALCATEL SATMAM**
**113 rue Jean-Marin Naudin**
**F-92220 Bagneux (FR)**

(72) Inventor : **Pike, Timothy David**
**16599 Springbrook Lane**
**Castro Valley, California 94552 (US)**

(74) Representative : **Sciaux, Edmond**
**c/o SOSPI, 14-16 rue de la Baume**
**F-75008 Paris (FR)**

(54) **Ball engagement system.**

(57) A self-aligning mechanical mechanism such as a drive clutch. Three or more hemispherical protrusions are placed on a drive plate driven by a flexible coupling. The drive plate engages a driven plate provided with a plurality of corresponding hemispherical or cylindrical recessed regions. The protrusions and recessed regions are equally and closely spaced. The system provides self-alignment as well as minimum disengagement force.

FIG. 1.

EP 0 495 701 A1

## BACKGROUND OF THE INVENTION

The present invention relates to the field of mechanical alignment and engagement systems. In one specific embodiment the invention provides a mechanical engagement which is particularly valuable for use in drive systems using a drive or driven shaft.

Mechanical engagement and alignment devices are well known to those of skill in the art. Such engagement and alignment systems have a variety of uses including, for example, clutches which engage and disengage a drive shaft and a driven shaft. For example, U.S. Patent No. 2,497,893 (Linahan) and British Patent No. 579,429 describe exemplary systems.

While meeting with substantial success, prior mechanical engagement systems have also met with certain limitations. For example, alignment in prior mechanical engagement systems has often presented certain difficulties. For example, when two face plates are brought together in many such mechanical systems the plates can be aligned for engagement only if the centerlines of the drive shaft and the driven shaft are in precise alignment. In some mechanical systems this is acceptable, but it is often desirable to provide an engagement system which is self-aligning, i.e., a system in which the drive plates will naturally be urged into alignment as the drive plates are brought into close contact. Further, such prior systems tend to have a large disengagement force, i.e., the force needed to hold the drive portion and the driven portion of the system in engagement tends to be high. Other systems tend to be complex.

From the above it is seen that an improved method and apparatus for engaging two mechanical systems is needed.

## SUMMARY OF THE INVENTION

An improved mechanical engagement system is provided according to the present invention. The engagement system is beneficial in that it is self-aligning and will tend to be drawn into alignment even when the plates which comprise the system are not in perfect alignment. Further, the system has only very limited disengagement force.

Torque transmission herein is accomplished by the surface of spheres engaging or impinging on the surface of recesses. Hemispheres in preferred embodiments engage matching, equally spaced spherical or cylindrical sockets in a circular pattern around a centerline of the device. Low retention force (i.e., the force required to maintain engagement of a drive surface and a driven surface) is achieved by providing a drive interface between the spheres and recesses along a diameter of the spheres. When a force is applied normal to the diameter of such spheres, force is transmitted only in that direction and forces are zero in all other directions, unlike other inclined surfaces where forces will be resolved into two or three force components which are at right angles to each other.

Self-alignment is also provided according to preferred embodiments of the invention herein, i.e., as the forces of the device are brought together, they naturally tend to bring themselves into aligned engagement because of the spherical protrusions used herein. As the first ball enters a hole (socket), the tendency is for self-centering on one axis, i.e., the axis of relative motion. When the second ball begins to enter a socket, there is a natural tendency toward self-centering on a second axis, i.e., the axis developed between the first and second ball centers. When the third ball begins to engage a third socket, there is a tendency to alignment on a third axis, i.e., a plane defined by the centers of the spheres.

The invention also provides angular registration because there is a tendency for engagement to occur only at precise angular increments between the drive and driven devices. This is accomplished by spacing the spheres/sockets at equal increments permitting indexing action only within a prescribed number of positions. Advantageously, the drive and driven plates need not be fully engaged for effective use of the system described herein. The system will work effectively when the drive and driven plates contact each other at an angle such that full contact is not achieved.

Accordingly, in one embodiment the invention comprises a mechanical system alignable on at least two axes. The system includes a first plate, the first plate comprising at least one hemispherical protrusion from a face thereof, the face at least partially lying in a face plane, the face plane having at least first and second axes, a third axis defined perpendicular to the first plate, the first plate movable along at least one of the first or the second axes. The system also includes a second plate, adjacent the first plate, at least one of the first or the second plates movable generally along the third axis, the second plate comprising at least two recessed regions, the recessed regions having a circular shape in a face of the second plate, the recessed regions aligning to and fitting in a close fitting relation with the protrusions in at least two positions of rotation on the third axis.

A further understanding of the nature and advantages of the inventions herein may be realized by reference to the remaining portions of the specification and the attached drawings.

## BRIEF DESCRIPTION OF THE DRAWINGS

Fig. 1 is an isometric view of the ball engagement drive in a disengaged fashion;

Fig. 2 is a cross-sectional view of the ball engagement system. Figs. 2a to 2c illustrate alternative shapes of recesses; and

Fig. 3 illustrates the rejection force (or disengagement force) in accordance with the invention herein.

## DESCRIPTION OF THE PREFERRED EMBODIMENTS

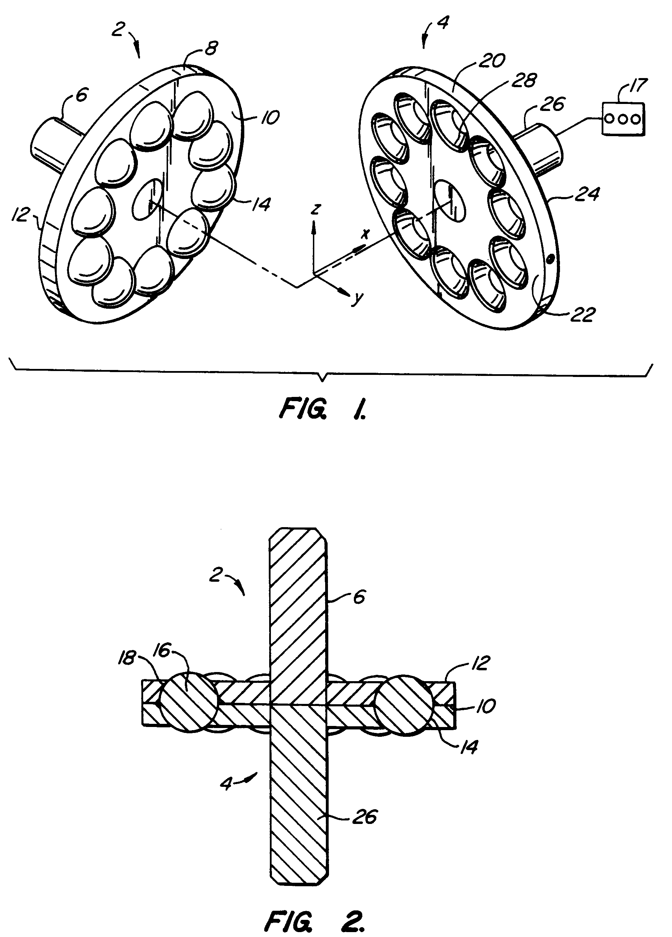

Fig. 1 is an isometric view of the mechanical engagement system. The engagement system includes a first, drive portion 2 and a second, driven portion 4. Of course, the roles of the two portions could readily be reversed, in which case the first portion would act as a driven portion and the second portion would act as a drive portion. Further, it is to be recognized that while the invention is illustrated herein with regard to clutch systems, the invention is not so limited and could be utilized for alignment and engagement of many mechanical systems such as any machine requiring a removable drive such as drills, mixers, screw drivers, winches, drum devices (i.e., washers, dryers, tumblers, crushers) flowmeters, propellors, etc.

The drive portion 2 includes a drive shaft 6. The drive shaft connects to and, in the embodiment illustrated herein, extends through a drive plate 8. In the particular embodiment shown in the figures, the drive plate is flat and circular, but the invention is not so limited. For example, the drive plate may be manufactured in any one of a variety of geometric shapes such as rectangular, or the plate could be a non-flat or irregular shape when viewed in cross section.

The drive plate includes a drive face 10 and an opposing face 12. Mounted rigidly on or extending into the drive face 10 are a plurality of hemispherical protrusions 14; in the particular embodiment illustrated herein 10 such protrusions are attached to the drive face. It is to be understood that by "hemispherical" it is intended to mean herein not exactly one half of a sphere, but instead a substantial fraction of a sphere such as from 50 to 55% of a sphere. The protrusions are preferably spaced at equal radial angles around the center of the drive face so as to provide for engagement of the drive face and driven face at a plurality of rotational orientations. In preferred embodiments, the edges of the protrusions are separated by the minimum radial distance consistent with the mechanical requirements of the particular system in question. For example, in preferred embodiments the edges of the protrusions are separated by from about 0 to 3 degrees. In alternative embodiments, the spherical shape of the protrusions and depressions may actually overlap. It is noteworthy that an alignment shaft need not be provided for alignment with the driven plate.

The number of such protrusions will vary widely from one application to another. For example, in some embodiments as few as a single hemisphere will be provided. To take full advantage of the self-aligning features disclosed herein, at least three such protrusions should be utilized. Ten such protrusions are conveniently utilized herein for compatibility with driven systems 17 used in postage meters and the like in which it is desirable to have alignment positions corresponding to each of the ten decimal digits.

In the embodiment shown in the figures, the hemispheres are conveniently formed from ball bearings 16 such that the balls are brazed or welded into the socket plate. As shown in Fig. 1, such bearings extend fully through the drive plate 8 in hemispherical or cylindrical recesses 18. The recesses preferably extend through the face plate in the particular example of a master pattern or tool shown in Fig. 1 for easy fabrication since the recesses may be formed by drilling a pilot hole in the drive plate, followed by formation of the hemispherical recess with a conventional ball end cutter. The drive is cast molded in preferred embodiments.

The driven portion 4 includes a driven plate 20 with driven face 22 and opposing face 24. Driven shaft 26 connects to the center of the driven plate 20. In the driven face 22, a plurality of recesses 28 are also provided, and may be formed according to the same procedure described above. The recesses in the driven plate are preferably spaced around the centerline of the driven shaft to correspond in shape and align with the protrusions in the drive plate.

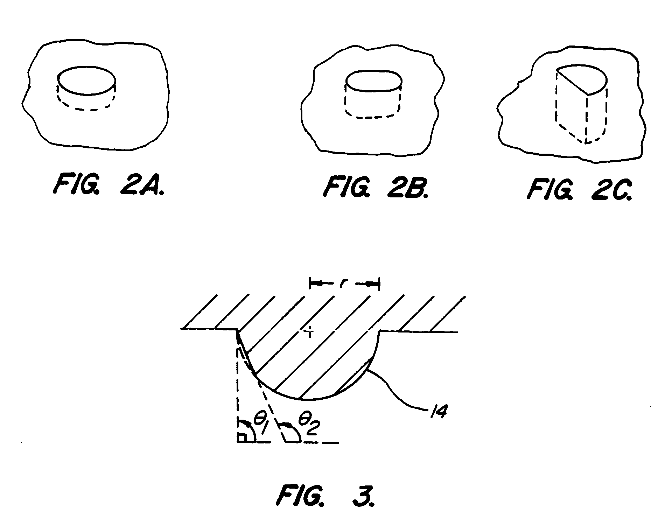

Although in most embodiments the number of recesses will be equal to the number of protrusions, in some embodiments the number of recesses is greater than the number of protrusions in the drive plate. The recessed regions preferably have a circular shape in the driven face, but may have any one of a number of shapes within the driven plate (i.e., when viewed in cross section). For example, the recessed regions may be shaped as cylinders. In the preferred embodiment shown in Figs. 1 and 2 the recessed regions are formed in the shapes of hemispheres, but the invention is not so limited. Other shapes used in some embodiments include "D"-shaped (or semi-circular). Figs. 2a to 2c illustrate alternative shapes of the recesses (spheres, cylinders, and semi-circular cylinders, respectively).

In operation, the drive shaft and the driven shaft are initially separated along the x-axis shown in Fig. 1. The shafts need not be in alignment along either the y- or the z-axis for proper operation of the system, nor do the drive shafts need to be aligned in a rotational sense about the x-axis. As the two members are brought into close proximity along the x-axis, the hemispherical protrusions will naturally guide the two members into alignment in a rotational sense around the x-axis, as well as along the y- and z-axes (the y- and z-axes defining a plane in which the drive plates and driven plates lie). Further, the system will align at effectively any relative rotational position of the drive shaft and the driven shaft when the protrusions and recesses are equally and closely spaced about the center of the drive shaft and driven shaft.

Alignment will be of particular importance in applications where the drive shaft and driven shaft are semi-rigid, flexible, or the like, such as a gimble mounted drive shaft driving a rigidly mounted driven shaft. Since the protrusions and their corresponding recesses are hemispherically shaped, the disengagement forces for engaging and disengaging the system will be small or zero, especially compared to sawtooth or other such designs.

The system described herein will function effectively even when the drive plate and the driven plate are engaged at an angle such that the plates contact each other only along one edge.

Fig. 3 illustrates the disengagement or rejection force encountered in drive systems according to preferred embodiments of the invention herein. The applied torque force is indicated by the arrow. The rejection force will be approximately:

rejection force = (torque force/r)*cosθ

where two θ's are illustrated in Fig. 3 and r is the radius of the hole. For θ = 90°, the rejection force is 0, while for θ > 90°, the rejection force will be negative, i.e., the system will be self-locking.

The various components of the system may be fabricated from one or more of a wide variety of materials depending upon the intended application of the system.

The above description is illustrative and not restrictive. Many variations of the invention will become apparent to those of skill in the art upon review of this disclosure. The scope of the invention should, therefore, be determined not with reference to the above description, but instead should be determined with reference to the appended claims along with their full scope of equivalents.

**Claims**

1. A mechanical system alignable on at least two axes comprising:
   a) a first plate, said first plate comprising at least one hemispherical protrusion from a face thereof, said face at least partially lying in a face plane, said face plane lying in first and second axes, a third axis defined perpendicular to said first plate, said first plate movable along at least one of said first or said second axes; and
   b) a second plate, adjacent said first plate, at least one of said first or said second plates movable generally along said third axis, said second plate comprising at least two recessed regions, said recessed regions having a circular shape in a face of said second plate, said recessed regions aligning to and fitting in a close fitting relation with said protrusions in at least two positions of rotation on said third axis.

2. A drive assembly comprising:
   a) a first plate having a series of closely spaced hemispherical protrusions around a rotational axis of said first plate; and
   b) a second plate having a series of recessed regions, said recessed regions opposing said protrusions and shaped to engage said protrusions in a tightly fitting relationship, at least one of said plates driving or driven by a movable coupling, said movable coupling subjecting at least one of said first or said second plates to misalignment with respect to the other of said plates, said recessed regions having a cross-sectional shape selected from the group of hemispheres, cylinders, and semi-circular cylinders.

3. Apparatus as recited in claims 1 or 2 wherein said plates are substantially flat.

4. Apparatus as recited in claims 1 or 2 wherein said recessed regions are substantially in a shape selected from the group of a cylinder and one-half of a sphere.

5. A drive assembly as recited in claims 1 or 2 wherein said protrusions are formed from a plurality of spherical balls, said spherical balls mounted in said first plate in depressions therein.

6. A drive assembly as recited in claim 5 wherein said depressions in said first plate extend through said first plate.

7. A drive assembly as recited in claim 1 attached to a drive shaft and a driven shaft, at least one of said drive shaft or said driven shaft being a movable shaft.

8. The assembly as recited in claim 1 wherein said recessed regions are hemispherical cylindrical regions.

9. A drive assembly as recited in claims 1 or 2 comprising at least three of said protrusions and at least said protrusions recessed regions separated by less than about 3 degrees in said first plate.

10. A drive assembly as recited in claim 9 wherein said protrusions are in contact along a circle in said first plate.

**11.** A drive system in a postage meter for driving a decimal output in said postage meter comprising:

a) a drive shaft and a driven coupling, at least one of said drive shaft and said driven coupling being flexible, said driven coupling driving said decimal output; and

b) a drive plate attached to each of said drive shaft and said driven coupling, a first of said drive plates comprising a first plurality of depressions, a second of said drive plates comprising a plurality of protrusions opposing said first depressions and engaged in a tight fitting relationship therewith when said drive is engaged, said protrusions comprising a spherical member set into a depression and extending therethrough, said depressions having a cross-sectional shape selected from the group of hemispheres and cylinders.

FIG. 1.

FIG. 2.

FIG. 2A.

FIG. 2B.

FIG. 2C.

FIG. 3.

European Patent
Office

**EUROPEAN SEARCH REPORT**

Application Number

EP 92 40 0078
Page 1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 049 525 (FISHER & LUDLOW) | 1-8,11 | F16D7/04 |
| A | * the whole document * | 10 | |
| | --- | | |
| X | GB-A-889 495 (SUNBEAM) | 1-6,8,11 | |
| A | * page 4 - page 5; figures 3-9 * | 10 | |
| | --- | | |
| X | US-A-2 333 858 (GRIFFIN) | 1-4,7,11 | |
| Y | * the whole document * | 5,6 | |
| A | | 10 | |
| | --- | | |
| Y | US-A-4 255 946 (HANSEN) | 5,6 | |
| | * the whole document * | | |
| | --- | | |
| X | US-A-2 407 155 (HOLMES) | 1-3,5,7, 11 | |
| A | | 10 | |
| | * the whole document * | | |
| | --- | | |
| X | US-A-1 469 059 (LANZETTA) | 1,2,4,7, 8,11 | TECHNICAL FIELDS SEARCHED (Int. Cl.5 ) |
| Y | * the whole document * | 5,9,10 | |
| | --- | | F16D |
| Y | WO-A-9 014 923 (MCGREADIE) | 5,9,10 | |
| | * the whole document * | | |
| | --- | | |
| X | US-A-2 496 871 (GRIFFIN) | 1-3,7,8, 11 | |
| A | | 10 | |
| | * the whole document * | | |
| | --- | | |
| X | US-A-2 261 901 (ERDMAN) | 1-3,7,11 | |
| A | | 10 | |
| | * the whole document * | | |
| | --- | | |
| X | US-A-2 281 913 (BROOKS) | 1-3,7,11 | |
| A | | 10 | |
| | * the whole document * | | |
| | --- | | |

The present search report has been drawn up for all claims

| Place of search | Date of completion of the search | Examiner |
|---|---|---|
| THE HAGUE | 05 MARCH 1992 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ........................................................................................
& : member of the same patent family, corresponding document

EPO FORM 1503 03.82 (P0401)

**EUROPEAN SEARCH REPORT**

Application Number

EP    92 40 0078
Page 2

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-4 789 377 (HOSKINS) | 1,2,4,7, 8,11 | |
| A | * the whole document * | 10 | |
| | ----- | | |

TECHNICAL FIELDS SEARCHED (Int. Cl.5 )

The present search report has been drawn up for all claims

| Place of search | Date of completion of the search | Examiner |
|---|---|---|
| THE HAGUE | 05 MARCH 1992 | BALDWIN D.R. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document